# EUROPEAN PATENT APPLICATION

(11) **EP 4 517 371 A1**
(43) Date of publication of application: **05.03.2025**
(21) Application number: 22943163.0
(22) Date of filing: 26.05.2022
(51) Int. Cl.: G01S 7/481

(54) **SCANNING DEVICE, LASER RADAR, AND TERMINAL**

(71) Applicant: Shenzhen Yinwang Intelligent Technologies Co., Ltd., Shenzhen, Guangdong 518129 (CN)
(72) Inventor: QIU, Sunjie, Shenzhen, Guangdong 518129 (CN); AN, Kai, Shenzhen, Guangdong 518129 (CN); GUO, Jiaxing, Shenzhen, Guangdong 518129 (CN); HAN, Wei, Shenzhen, Guangdong 518129 (CN); ZHANG, Haoliang, Shenzhen, Guangdong 518129 (CN)
(74) Representative: Maiwald GmbH
(86) International application number: PCT/CN2022/095360
(87) International publication number: WO 2023/225963

(57) **Abstract**

Embodiments of this application provide a scanning apparatus, a lidar, and a terminal, which may be used in the fields of detection, intelligent surveying and mapping, intelligent driving, and the like. The scanning apparatus includes a scanner body, a polarizer layer, and a waveplate layer, the scanner body has at least one reflecting plane, the polarizer layer is attached to the reflecting plane of the scanner body, and the waveplate layer is attached to the polarizer layer. The waveplate layer and the polarizer layer are disposed on the reflecting plane, so that a light signal that emerges through the scanner can be blocked by the polarizer layer when reflected by an optical element back to the scanning apparatus. Embodiments of this application further provide a lidar and a terminal using the scanning apparatus. According to embodiments of this application, fewer ghost images can be generated, and strength of an interference signal can be reduced. This helps improve identification precision of a detection apparatus. Embodiments of this application may be further applied to the field of intelligent vehicle technologies, such as vehicle-to-everything V2X, a long term evolution-vehicle LTE-V technology, and vehicle to vehicle V2V.

## Description

### TECHNICAL FIELD

This application relates to detection technologies, and in particular, to a scanning apparatus, a lidar, and a terminal.

### BACKGROUND

A lidar is a detection apparatus that combines a laser technology and a photoelectric conversion technology. The lidar detects features such as a location, a shape, and a speed of a target object by transmitting a laser signal. When sensing an ambient environment, the lidar inevitably encounters a high reflective target or a special reflective (briefly referred to as corner reflector) target, for example, a traffic sign on a road, a warning sign on a road, a road sign, a safety bollard and protective barrier by a roadside, a convex safety mirror at a corner, a license plate of a vehicle, or a high reflective coated sticker on a vehicle. The high reflective (briefly referred to as high reflective) target or corner reflector target may generate relatively bright scattered light that may affect a real echo signal. For example, a ghost image of the high reflective target or the corner reflector target may be mistakenly detected by the detection apparatus. For another example, a signal returned by the high reflective target or the corner reflector target may submerge an echo signal of a real object.

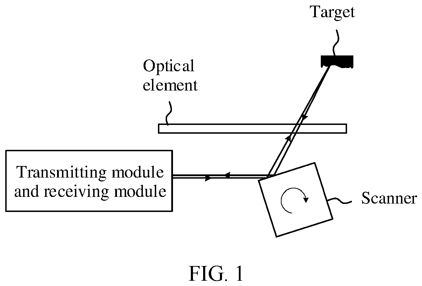

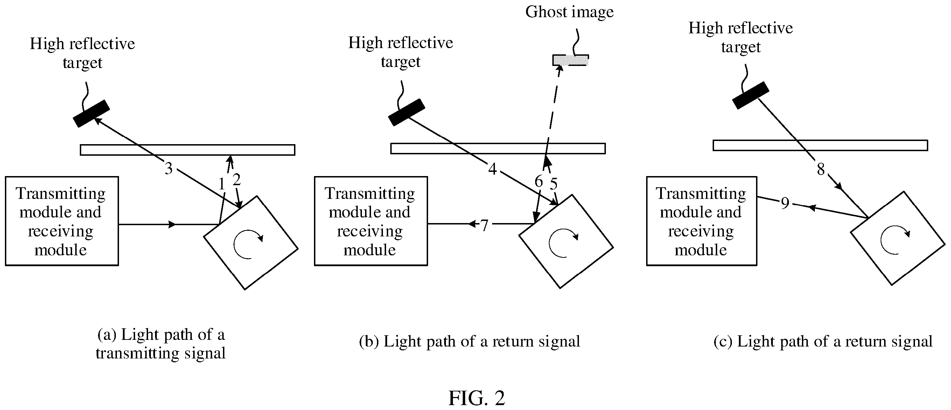

For example, FIG. 1 and FIG. 2 show some operating scenarios of the detection apparatus. A light signal transmitted by a transmitting module may reach a detection area through a scanner. As shown in FIG. 1, in some cases, the light signal normally reaches the detection area through an optical element, and is received by a receiving module through the scanner after being reflected by an object in the detection area.

However, the transmitting signal may be reflected by the optical element, and a reflected signal may be reflected by the scanner and then reach the detection area again. As shown in (a) in FIG. 2, in some cases, some light signals (for example, a signal 1) may be reflected by the optical element. After a signal (for example, a signal 2) reflected by the optical element reaches the scanner, a signal (for example, a signal 3) is reflected by the scanner to a field of view again. As shown in (b) in FIG. 2, if there is a high reflective target (or a corner reflector target) in the field of view, a relatively strong reflected signal (a signal 4) may be generated, and the reflected signal is received by the receiving module through the scanner (as shown in light paths of a signal 5, a signal 6, and a signal 7). Because the receiving module cannot distinguish between signals that are reflected to the detection area by the scanner a plurality of times, the receiving module may mistakenly consider that there is an object in another area. As a result, a ghost image of the high reflective target (or the corner reflector target) is formed. As shown in (c) in FIG. 2, a signal returned by the high reflective target may also reach the receiving module through the scanner. As a result, an interference signal is formed.

The ghost image and/or the interference signal may affect identification of the target object by the lidar. Therefore, how to improve identification accuracy of the lidar is a problem that is being studied by a person skilled in the art.

### SUMMARY

Embodiments of this application provide a scanning apparatus, a lidar, and a terminal, so that fewer ghost images can be generated. This helps improve identification precision of the lidar.

According to a first aspect, an embodiment of this application provides a scanning apparatus, including a scanner body, a polarizer layer, and a waveplate layer. The scanner body has at least one reflecting plane, the polarizer layer is attached to the reflecting plane of the scanner body, and the waveplate layer is attached to the polarizer layer.

The waveplate layer includes one or more waveplates. The waveplate, also referred to as a phase delay plate, is fabricated by using a birefringent material. The waveplate can enable two orthogonal polarization components of a light signal that passes through the waveplate to generate phase shifts, and can be configured to adjust a polarization state of a light beam.

Optionally, the waveplate layer can enable one orthogonal component of the passed light signal to generate a phase shift of (2k+1)π/2, where k is a natural number. For example, the waveplate layer may include a quarter-wave plate, and the quarter-wave plate can enable the orthogonal component of the passed light signal to generate a phase shift of π/2. For example, the waveplate layer may include a quarter-wave plate and a half-wave plate, and the combination of the quarter-wave plate and the half-wave plate can enable the orthogonal component of the passed light signal to generate a phase shift of 3π/2.

The polarizer layer has a polarizer or a polarization beam splitting device. The polarizer is an optical filter. When a light signal passes through the polarizer, a transmittance of the light signal is related to a polarization direction. Generally, linearly polarized light in a specific direction can pass, but light whose polarization direction is perpendicular to a polarization direction of the polarizer is blocked (cannot pass), and the light whose polarization direction is perpendicular to the polarization direction of the polarizer may be absorbed or reflected to another direction.

Optionally, the scanning apparatus moves as a whole, to form reflecting planes at a plurality of angles. For example, the overall movement includes a movement such as swing or rotation.

When specular reflection is performed on the polarized light, reflected light is still the polarized light. Therefore, the waveplate layer and the polarizer layer are disposed on the reflecting plane, so that a light signal that emerges through the scanning apparatus can be blocked by the polarizer layer when reflected by an optical element back to the scanning apparatus. Therefore, the scanning apparatus in this application can eliminate a transmitting signal that is reflected back by the optical element, prevent the signal reflected by the optical element from being reflected by the scanning apparatus to a detection area again, so that fewer ghost images can be generated. This helps improve identification precision of a detection apparatus (for example, the lidar).

In addition, stability and accuracy of a light path and an optical axis can directly affect effect of devices such as the polarizer and the wave plate. The waveplate layer and the polarizer layer in this application are attached to the reflecting plane, so that impact of vibration on the optical element can be reduced, and stability of the scanning apparatus can be improved. This helps improve detection performance of the detection apparatus.

In a possible implementation of the first aspect, the polarizer layer is attached to the reflecting plane of the scanner body through gluing. The polarizer layer is pasted on the reflecting plane through gluing, so that connection stability between optical elements can be enhanced, impact of vibration on the optical element can be reduced, and stability of the scanning apparatus can be improved. This helps improve detection performance of the detection apparatus.

The gluing (also referred to as bonding, bonding, or gluing) means a technology in which surfaces of homogeneous or heterogeneous objects are connected together by using an adhesive. The adhesive is a kind of natural or synthetic, and organic or inorganic substance that can enable, through functions such as adhesion and cohesion of an interface, two or more components or materials to be connected together, is also referred to as an adhesive, and is also briefly referred to as glue in daily life.

For example, the gluing may be implemented by using an optically clear adhesive (optically clear adhesive, OCA).

In a possible design, the gluing includes the following manner: applying pressure to enable surfaces of two optical parts to be absorbed together. In this case, the surfaces of the two attached optical parts are usually clean, smooth, and have consistent shapes. In some scenarios, this manner is also referred to as optical contact bonding. Gluing is performed by using the optical contact bonding, so that a plane between the polarizer layer and the reflecting plane can be more flat, light transmittance can be improved, and energy consumption can be reduced.

In another possible implementation of the first aspect, the waveplate layer is attached to the polarizer layer through gluing. The waveplate is pasted on the polarizer layer through gluing, so that connection stability between optical elements can be enhanced, impact of vibration on the optical element can be reduced, and stability of the scanning apparatus can be improved. This helps improve detection performance of the lidar.

Optionally, the gluing includes a connection by using the adhesive, a connection by using the optical contact bonding, and the like.

In another possible implementation of the first aspect, an incident light signal is incident on the waveplate layer and the polarizer layer in sequence, and emerges from the polarizer layer and the waveplate layer in sequence after being reflected by the reflecting plane, to obtain an emergent signal.

Optionally, when the reflector body has a plurality of reflecting planes, in each reflecting plane, starting from the scanner body, there are respectively the scanner body, the polarizer layer, and the waveplate layer from inside to outside.

In another possible implementation of the first aspect, the polarizer layer is configured to block a specularly reflected light signal corresponding to the emergent signal, and the specularly reflected light signal is a light signal obtained through specular reflection performed on the emergent signal.

It may be understood that when diffuse reflection is performed on the light signal on a surface of an object, diffusely reflected light is natural light. When light is specularly reflected on the surface of the object, specularly reflected light is polarized light. The polarizer layer can block a light signal whose polarization direction is perpendicular to a polarization direction of the polarizer. Therefore, after the specularly reflected signal of the emergent signal passes through the waveplate layer, a polarization direction of a specularly reflected signal is perpendicular to the polarization direction of the polarizer layer. In this case, the polarizer layer can block the specularly reflected light signal corresponding to the emergent signal.

Because a light signal reflected by the optical element (for example, a window) is usually the specularly reflected light signal, the scanning apparatus in this application can block the light signal reflected by the optical element, to prevent the signal returned by the optical element from being irradiated to a field of view again, so that fewer ghost images can be generated, and strength of an interference signal can be reduced. This helps improve identification precision of the detection apparatus (for example, the lidar).

In another possible implementation of the first aspect, the polarizer layer is configured to: block a first reflected light signal, and transmit a second reflected light signal, where the first reflected light signal is obtained through reflection performed on the emergent signal by a window, and the second reflected light signal is obtained through reflection performed on the emergent signal by an object in a field of view of the scanning apparatus.

In the foregoing implementation, the emergent signal is reflected by the window, and reaches the scanning apparatus again. In addition, in this application, the signal returned by the window can be blocked, to prevent the signal returned by the window from being irradiated to the detection area again, so that fewer ghost images can be generated, and strength of an interference signal can be reduced. This helps improve signal effectiveness.

In another possible implementation of the first aspect, a first light signal from a laser transmitter passes through the waveplate layer and the polarizer layer in sequence, to obtain a second light signal, where the second light signal is parallel to a polarization direction of the polarizer layer;
the second light signal passes through the polarizer layer after being reflected by the at least one reflecting plane, to obtain a third light signal, where a polarization direction of the third light signal is parallel to the polarization direction of the polarizer layer;
the third light signal passes through the waveplate layer, to obtain a fourth light signal, where a polarization direction of the fourth light signal is circular polarization;
a return signal corresponding to the fourth light signal includes a fifth light signal and a sixth light signal, where the fifth light signal is a light signal obtained through specular reflection performed on the fourth light signal, the sixth light signal is a light signal obtained through diffuse reflection performed on the fourth light signal, and a polarization direction of the fifth light signal is circular polarization;
the fifth light signal is incident on the waveplate layer and is converted into a seventh light signal by the waveplate layer, the seventh light signal is incident on the polarizer layer, the seventh light signal is blocked by the polarizer layer, and a polarization direction of the seventh light signal is perpendicular to the polarization direction of the polarizer layer;
the sixth light signal is incident on the waveplate layer, passes through the waveplate layer, and is incident on the polarizer layer, a light signal that is in the sixth light signal and whose polarization direction is perpendicular to the polarization direction of the polarizer layer is blocked by the polarizer layer, and a light signal that is in the sixth light signal and whose polarization direction is parallel to the polarization direction of the polarizer layer passes through the polarizer layer, to obtain an eighth light signal; and
the eighth light signal is reflected by the at least one reflecting plane, and is provided to a receiver after passing through the polarizer layer and the waveplate layer in sequence.

In another possible implementation of the first aspect, the fifth light signal is obtained through reflection performed on the emergent signal by the window, and the sixth light signal is obtained through reflection performed on the emergent signal by the object in the field of view of the scanning apparatus.

In another possible implementation of the first aspect, the scanner body includes a first part and a second part, the first part and the second part are arranged along a direction of a rotating shaft or a pivot, the polarizer layer is attached to a reflecting plane of the first part of the scanner body, and no polarizer layer is disposed on a reflecting plane of the second part of the scanner body.

In the foregoing implementation, the scanner body has a plurality of parts. The first part is configured to transmit a signal, and the second part is configured to receive a signal. The polarizer layer is disposed on the first part, so that the specularly reflected light signal can be blocked. No polarizer layer is disposed on the second part, so that energy of a signal returned by the detection area can be prevented from being weakened. Therefore, light transmittance can be improved, and energy consumption can be reduced. This helps improve signal effectiveness.

In another possible implementation of the first aspect, a first light signal from a laser transmitter passes through the waveplate layer and the polarizer layer in sequence, to obtain a second light signal, where the second light signal is parallel to a polarization direction of the polarizer layer;
the second light signal passes through the polarizer layer after being reflected by the reflecting plane of the first part, to obtain a third light signal, where a polarization direction of the third light signal is parallel to the polarization direction of the polarizer layer;
the third light signal passes through the waveplate layer, to obtain a fourth light signal, where a polarization direction of the fourth light signal is circular polarization;
a return signal corresponding to the fourth light signal includes a ninth light signal and a tenth light signal, where the ninth light signal is a light signal obtained through specular reflection performed on the fourth light signal, the tenth light signal is a light signal obtained through diffuse reflection performed on the fourth light signal, and a polarization direction of the ninth light signal is circular polarization;
the ninth light signal is incident on the waveplate layer and is converted into an eleventh light signal by the waveplate layer, the eleventh light signal is incident on the polarizer layer, the eleventh light signal is blocked by the polarizer layer, and a polarization direction of the eleventh light signal is perpendicular to the polarization direction of the polarizer layer; and
the tenth light signal is irradiated on the reflecting plane of the second part of the scanner body, and is reflected by the reflecting plane of the second part of the scanner body, to obtain a twelfth light signal, where the twelfth light signal is provided to a receiver.

In another possible implementation of the first aspect, the ninth light signal is obtained through reflection performed on the emergent signal by the window, and the tenth light signal is obtained through reflection performed on the emergent signal by the object in the field of view of the scanning apparatus.

In another possible implementation of the first aspect, the waveplate layer includes a quarter-wave plate.

In another possible implementation of the first aspect, the waveplate layer includes the quarter-wave plate and a half-wave plate. In the foregoing implementation, a combination of " the half-wave plate + the quarter-wave plate" has effect of de-dispersion. Even when a wavelength drifts in a high-temperature or a low-temperature case, a ghost image can be eliminated. This helps improve identification precision of the detection apparatus (for example, the lidar).

In another possible implementation of the first aspect, the reflecting plane includes a substrate, and a material of the substrate is metal.

In another possible implementation of the first aspect, the reflecting plane includes the substrate and a reflective coating, and the reflective coating is attached to a surface of the substrate.

In another possible implementation of the first aspect, the material of the substrate is glass or crystal.

In another possible implementation of the first aspect, a difference between a first angle and a second angle is less than or equal to a first threshold, the first angle is an included angle between the polarization direction of the polarizer layer and an optical axis direction of the waveplate layer, and the second angle is 45°.

The waveplate has a fast axis and a slow axis, both of which are perpendicular to a surface and a light beam propagation direction, and the fast axis and the slow axis are perpendicular to each other. In this embodiment of this application, if the incident light signal is linearly polarized light, and an included angle between the incident light signal and the optical axis of the waveplate layer is 45°, the emergent signal is circularly polarized light after the incident light signal passes through the waveplate layer. On the contrary, after circularly polarized light passes through the waveplate layer, linearly polarized light may be obtained. If the included angle between the incident light signal and the optical axis deviates from 45°, after the linearly polarized light passes through the waveplate layer, elliptically polarized light is obtained.

Therefore, by disposing the polarization direction of the polarizer layer and the optical axis direction of the waveplate layer, effect that the polarizer layer blocks the specularly reflected light signal can be controlled, to further meet a user requirement. When the first angle is closer to 45°, the effect that the polarizer layer blocks the specularly reflected light signal is better, so that fewer ghost images can be generated.

In another possible implementation of the first aspect, there is an anti-reflective coating on a first surface of the waveplate layer, and the first surface is a surface away from the scanner body.

By disposing the anti-reflective coating, a transmittance of a light signal at the waveplate layer can be improved, and energy consumption can be reduced. This helps improve signal effectiveness.

According to a second aspect, an embodiment of this application provides a detection apparatus, where the detection apparatus includes a scanning module, a transmitting module, and a receiving module. The transmitting module is configured to generate a transmitting signal, the receiving module is configured to detect a light signal, and the scanning module includes the scanning apparatus according to any one of the possible implementations of the first aspect.

In a possible implementation of the second aspect, the detection apparatus further includes a window. A light signal obtained through reflection performed by the window is blocked by a polarizer layer in the scanning apparatus, and a light signal obtained through reflection performed by an object in a field of view of the detection apparatus is provided to the receiving module by the scanning apparatus.

According to a third aspect, an embodiment of this application provides a terminal, where the terminal includes the scanning apparatus according to any one of the possible implementations of the first aspect, or the terminal includes the detection apparatus according to any one of the possible implementations of the second aspect.

Optionally, the terminal is a vehicle, an uncrewed aerial vehicle, or a robot.

### BRIEF DESCRIPTION OF DRAWINGS

The following briefly describes the accompanying drawings used for describing embodiments.
FIG. 1 is a diagram of an operating scenario of a detection apparatus;
FIG. 2 is a diagram of an operating scenario of a detection apparatus;
FIG. 3 is a diagram of an architecture of a detection apparatus according to an embodiment of this application;
FIG. 4 is a diagram of an architecture of a scanning apparatus according to an embodiment of this application;
FIG. 5 is a diagram of a light path passing through a scanning apparatus according to an embodiment of this application;
FIG. 6 is a diagram of a light path of a laser signal passing through a scanning apparatus according to an embodiment of this application;
FIG. 7 is a diagram of a transmitting light path according to an embodiment of this application;
FIG. 8 is a diagram of a receiving light path according to an embodiment of this application;
FIG. 9 is a diagram of another receiving light path according to an embodiment of this application;
FIG. 10 is a diagram of a usage scenario of a scanning apparatus according to an embodiment of this application;
FIG. 11 is a diagram of another possible structure of a scanning apparatus according to an embodiment of this application;
FIG. 12 is a diagram of another usage scenario of a scanning apparatus according to an embodiment of this application;
FIG. 13 is a diagram of another structure of a scanning apparatus according to an embodiment of this application;
FIG. 14 is a diagram of another structure of a scanning apparatus according to an embodiment of this application;
FIG. 15 is a diagram of another structure of a scanning apparatus according to an embodiment of this application;
FIG. 16 is a diagram of another structure of a scanning apparatus according to an embodiment of this application;
FIG. 17 is a diagram of a layer connection manner of a scanning apparatus according to an embodiment of this application;
FIG. 18 is a diagram of another layer connection manner of a scanning apparatus according to an embodiment of this application;
FIG. 19A is a diagram of another layer connection manner of a scanning apparatus according to an embodiment of this application;
FIG. 19B is a diagram of another layer connection manner of a scanning apparatus according to an embodiment of this application;
FIG. 20A is a diagram of another structure of a scanning apparatus according to an embodiment of this application;
FIG. 20B is a diagram of another structure of a scanning apparatus according to an embodiment of this application;
FIG. 21 is a diagram of another structure of a scanning apparatus according to an embodiment of this application;
FIG. 22 is a diagram of another structure of a scanning apparatus according to an embodiment of this application;
FIG. 23 is a diagram of another structure of a scanning apparatus according to an embodiment of this application;
FIG. 24 is a diagram of another structure of a scanning apparatus according to an embodiment of this application; and
FIG. 25 is a diagram of a structure of a terminal according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

For ease of understanding, some concepts related to embodiments of this application are described for reference by using examples, as shown in the following.

### 1. Detection apparatus

The detection apparatus mentioned in embodiments of this application may be a lidar, or may be another optical detection apparatus, for example, a combined detection apparatus (for example, a detection apparatus that integrates a radar detector and an image sensor). An operating principle of the detection area is to detect a corresponding detection area by transmitting a light signal and receiving a returned light signal.

The detection apparatus in embodiments of this application can be used in various fields such as the fields of intelligent driving, intelligent transportation, intelligent manufacturing, environment detection, mapping, and uncrewed aerial vehicle, and can implement one or more functions of target detection, distance measurement, speed measurement, target tracking, imaging recognition, and the like.

The detection apparatus in embodiments of this application may be used in an in-vehicle detection apparatus (for example, an in-vehicle radar), a roadside detection apparatus (for example, an intersection radar), or the like, or may be used in another detection apparatus, for example, a detection apparatus installed on an apparatus such as an uncrewed aerial vehicle, a robot, a rail vehicle, a bicycle, a signal light, a speed measurement apparatus, or a base station. An installation location of the detection apparatus is not limited in this application.

### 2. Scanning

A scanning process is implemented based on a scanning apparatus. The scanning apparatus may move in a manner of rotation, swinging, electrical control, or the like.

Mechanical scanning means that scanning is performed on a field of view range by using an inertial scanning device. For example, 2D scanning is used as an example. 2D mechanical scanning may be implemented by using a 2D scanning device, or may be implemented by using a combination of two 1D scanning devices.

### 3. Waveplate

The waveplate, also referred to as a phase delay plate, is fabricated by using a birefringent material. The waveplate can enable two orthogonal polarization components of a light signal that passes through the waveplate to generate phase shifts, and can be configured to adjust a polarization state of a light beam.

The waveplate has a fast axis and a slow axis, both of which are perpendicular to a surface and a light beam propagation direction, and the fast axis and the slow axis are perpendicular to each other. In embodiments of this application, if an incident light signal is linearly polarized light, and an included angle between the incident light signal and an optical axis of a waveplate layer is 45°, an emergent signal is circularly polarized light after the incident light signal passes through the waveplate layer. On the contrary, after circularly polarized light passes through a waveplate layer, linearly polarized light may be obtained. If the included angle between the incident light signal and the optical axis deviates from 45°, after the linearly polarized light passes through the waveplate layer, elliptically polarized light is obtained.

### 4. Polarization (polarization)

The polarization means that a vibration direction of an electric vector of light has a specific rule. The polarization is an inherent attribute of the light, and a polarization state (polarization state) is a parameter for the light. The polarization state may be classified into linear polarization and elliptical polarization (including circular polarization).

For example, an electric vector of linearly polarized light vibrates back and forth in one direction.

However, an electric vector of unpolarized light, such as natural light, vibrates with no rules. The electric vector does not vibrate in a same direction, and there is no fixed time correspondence (no fixed phase) during vibration. Therefore, the unpolarized light vibrates randomly and with no fixed rule.

### 5. Polarizer

The polarizer is an optical filter. When a light signal passes through the polarizer, a transmittance of the light signal is related to a polarization direction. Generally, linearly polarized light in a specific direction can pass, but light whose polarization direction is perpendicular to a polarization direction of the polarizer is blocked (cannot pass), and the light whose polarization direction is perpendicular to the polarization direction of the polarizer may be absorbed or reflected to another direction.

For ease of description of a phenomenon that generates when the light signal passes through the polarizer, P polarized light (briefly referred to as P light below) and S polarized light (briefly referred to as S light below) are usually used to distinguish between light signals. The P light indicates linearly polarized light whose vibration direction is parallel to a polarization direction of the polarizer, and the S light indicates linearly polarized light whose vibration direction is perpendicular to the polarization direction of the polarizer.

### 6. Gluing

The gluing (also referred to as bonding, bonding, or gluing) means a technology in which surfaces of homogeneous or heterogeneous objects are connected together by using an adhesive. The adhesive is a kind of natural or synthetic, and organic or inorganic substance that can enable, through functions such as adhesion and cohesion of an interface, two or more components or materials to be connected together, is also referred to as an adhesive, and is also briefly referred to as glue in daily life.

Optionally, the gluing may be implemented by using an optically clear adhesive (optically clear adhesive, OCA).

In a possible design, the gluing includes the following manner: applying pressure to enable surfaces of two optical parts to be absorbed together. In this case, the surfaces of the two attached optical parts are usually clean, smooth, and have consistent shapes. In some scenarios, this manner is also referred to as optical contact bonding.

### 7. Field of view (field of view, FOV)

The field of view means a range that can be detected by a detection apparatus, and is also referred to as a field of view. In some scenarios, a line-of-sight (line of sight, LOS) area in which signal (for example, radio wave or laser light) transmission is not interrupted is needed between a transmitting end of the detection apparatus and a target object or between a receiving end of the detection apparatus and a target object. The line-of-sight area may be understood as the field of view.

In embodiments of this application, a physical world that can be detected by the detection apparatus is referred to as the detection area. In some specific embodiments, the physical world referred to by the detection area is a physical world located at an outside of the detection apparatus, and the outside herein may be an outside of an outermost component of the detection apparatus, for example, an outside of a window of a lidar.

The following describes a system architecture in embodiments of this application. It should be noted that the system architecture and the service scenario described in this application are intended to describe technical solutions in this application more clearly, and do not constitute a limitation on the technical solutions provided in this application. It should be understood that, with evolution of the system architecture and emergence of a new service scenario, the technical solutions provided in this application are also applicable to similar technical problems.

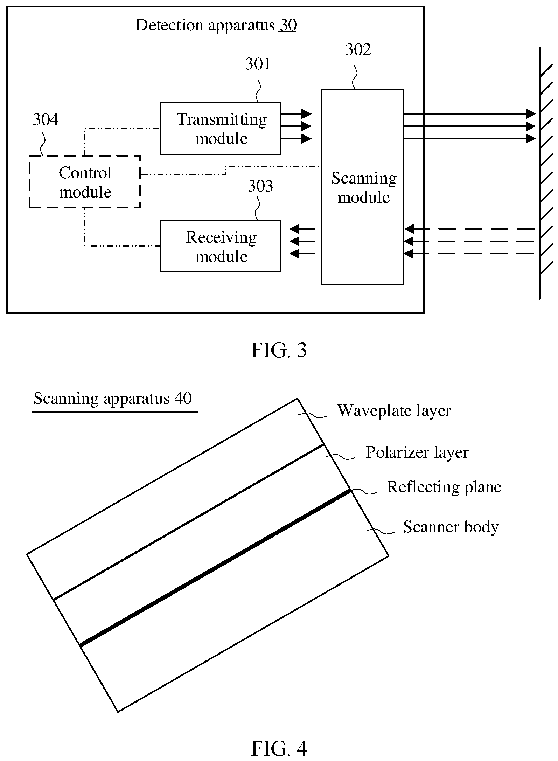

An architecture of a detection apparatus 30 provided in this embodiment of this application is shown in FIG. 3, and includes a transmitting module 301 and a scanning module 302.
(1) The transmitting module 301 includes a light source, and the light source is configured to generate a light signal. For example, the light source may include a light-emitting element (for example, a laser transmitter), and may generate infrared light, ultraviolet light, visible light, or a light signal of another wavelength.

In some possible implementations, the transmitting module 301 may include one or more of the following light-emitting elements: lasers such as a semiconductor laser, a fiber laser, or a gas laser. The semiconductor laser may specifically include light-emitting elements such as a laser diode (laser diode, LD), a vertical-cavity surface-emitting laser (Vertical-Cavity Surface-Emitting Laser, VCSEL), an edge-emitting laser (edge-emitting laser, EEL), a distributed feedback laser (distributed feedback LD, DFB-LD), a distributed Bragg reflector laser (distributed Bragg reflection LD, DBR-LD), a grating coupled sampled reflector laser (Grating coupled sampling reflection LD, GCSR-LD), and a micro-opto-electro-mechanical system laser (micro optical electro mechanical system LD, MOEMS-LD).

(2) The scanning module 302 is configured to change a propagation direction of light. For example, the scanning module 302 may change a propagation direction of the light signal from the light source, and/or the scanning module 302 may change a propagation direction of a light signal from an object in a field of view.

In this embodiment of this application, the scanning module may include at least one reflecting plane. The light signal from the light source may be irradiated to different locations in the field of view by changing an angle of the reflecting plane, so that detection of a detection area is completed.

(3) Optionally, the detection apparatus 30 may further include a receiving module 303. The receiving module 303 is configured to receive the light signal. Further, the receiving module may obtain an electrical signal based on the light signal. Optionally, the electrical signal may be output as detection data, or detection data is obtained through processing performed on the electrical signal and then is output.

Optionally, the receiving module 303 may include one or more detection elements. For example, the receiving module may include one or more of the following detection elements: at least one detection element of a single-photon avalanche diode (single-photon avalanche diode, SPAD), a silicon photomultiplier (Silicon photomultiplier, SiPM), a semiconductor avalanche photodiode (avalanche photodetector, APD), a multi-pixel photon counter (multi-pixel photon counter, MPPC), an electron multiplying charge-coupled device (electron multiplying charge-coupled device, EMCCD), or the like.

When the receiving module 303 includes the plurality of detection elements, the plurality of detection elements may be arranged in an array, for example, arranged in a form of a linear array or a plane array (optionally, the plurality of detection elements have functions of addressing and reading). In a possible solution, the receiving module may include an array of the detection elements with a specification such as a 1 × 2 array, a 2 × 3 array, or a 3 × 3 array. A quantity of rows and a quantity of columns arranged in an array are not limited in this application.

(4) Optionally, the detection apparatus 30 may further include a control module 304. The control module 304 is configured to control one or more of the transmitting module 301, the scanning module 302, the receiving module 303, or the like.

(5) Optionally, the detection apparatus 30 may further include one or more optical elements, for example, a window, a shaping device (for example, a collimation apparatus or a beam shaper), a mirror reflector, a lens, a polarizing filter, a filter, or a diffuser. For the detection apparatus in embodiments of this application, a quantity of the optical elements in the detection apparatus, a placement location, a placement sequence, a size, and the like of the optical element in the detection apparatus are not limited. It should be understood that quantities and installation locations of the transmitting module, the receiving module, the optical element, and the like are not limited in embodiments of this application. FIG. 3 is merely a possible case shown for ease of description, and is not intended to limit the detection apparatus 30.

When the foregoing detection apparatus is used for detection, because a light signal returned by the window or the optical element may be re-reflected by a scanning apparatus, re-reflected signal is very likely to be irradiated to the detection area. When the re-reflected signal is reflected back to the detection apparatus by a high reflective target or a corner reflector target in the detection area, it is likely to affect a real echo signal. For example, a ghost image of the high reflective target or the corner reflector target may be mistakenly detected by the detection apparatus. For another example, the signal returned by the high reflective target or the corner reflector target may submerge an echo signal of a real object.

In view of this, embodiments of this application provide a scanning apparatus, a lidar, and a terminal, so that fewer ghost images can be generated, strength of an interference signal can be reduced. This helps improve identification precision of the detection apparatus (for example, the lidar).

Embodiments of this application are particularly applicable to a scanning lidar. For example, the scanning apparatus provided in embodiments of this application may be used in the foregoing detection apparatus 30. For example, the scanning apparatus may replace the scanning module 302, or the scanning apparatus may be included in the scanning module 302.

The following describes in detail the solutions in embodiments of this application.

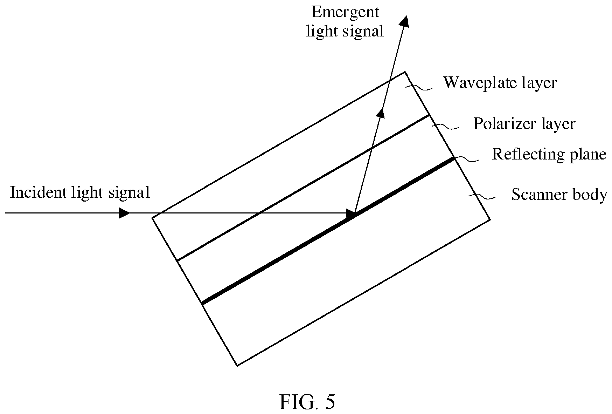

FIG. 4 is a diagram of a structure of a scanning apparatus 40 according to an embodiment of this application. The scanning apparatus 40 includes a scanner body, a polarizer layer, and a waveplate layer. The scanner body has at least one reflecting plane, the polarizer layer is attached to the reflecting plane of the scanner body, and the waveplate layer is attached to the polarizer layer. As shown in FIG. 5, when an incident light signal reaches the scanning apparatus, the light signal is incident on the waveplate layer and the polarizer layer in sequence, and emerges from the polarizer layer and the waveplate layer in sequence after being reflected by the reflecting plane.

In the scanning apparatus in this application, after linearly polarized light is incident on the waveplate layer, an emergent signal is circularly polarized light. In other words, the waveplate layer can enable one orthogonal component of a passed light signal to generate a phase shift of (2k+1)π/2, where k is a natural number.

When specular reflection is performed on polarized light, reflected light is still the polarized light. Therefore, a specularly reflected light signal obtained through specular reflection performed on the emergent signal is also circularly polarized light. After the circularly polarized light is incident on the waveplate layer, a light signal whose polarization direction is perpendicular to a polarization direction of the polarizer layer is obtained. Light whose polarization direction is perpendicular to the polarization direction of the polarizer layer may be blocked (cannot pass), and "blocked" herein may mean that the light is absorbed or reflected to another direction.

Because a surface of an optical element is usually smooth, specular reflection may be performed on a light signal on the optical element. The light signal transmitted through the scanning apparatus may be blocked by the polarizer layer when being reflected by the optical element back to the scanning apparatus. Therefore, the scanning apparatus in this application can eliminate a transmitting signal that is reflected back by the optical element, prevent the signal reflected by the optical element from being reflected by the scanning apparatus to a field of view again, so that fewer ghost images can be generated, and strength of an interference signal can be reduced. This helps improve identification precision of a lidar. In addition, the waveplate layer and the polarizer layer in this application are attached to the reflecting plane, so that impact of vibration on the optical element can be reduced, and stability of the scanning apparatus can be improved. This helps improve detection performance of the detection apparatus.

The foregoing describes the structure of the scanning apparatus. The following describes some possible implementations of embodiments of this application. It should be noted that the following plurality of implementations may be independently implemented, or may be implemented in combination. For the combination, details are not described in embodiments of this application again.

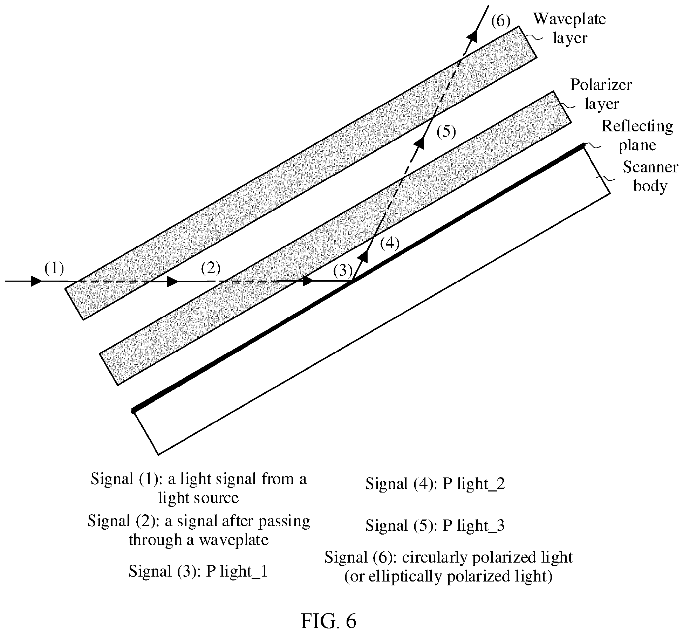

FIG. 6 is a diagram of a possible light path of a laser signal passing through a scanning apparatus according to an embodiment of this application. A signal (1) is a light signal from the light source. After the signal (1) passes through a waveplate, a signal (2) is obtained. The signal (2) is incident on the polarizer layer, and a signal transmitted from the polarizer layer is a signal (3). Because only a light signal whose polarization direction is parallel to the polarizer layer can pass, a polarization direction of the signal (3) is parallel to a polarization direction of the polarizer layer, that is, the signal (3) is P light. For ease of differentiation, the signal (3) is denoted as P light_1. The signal (3) is reflected when passing through the reflecting plane of the scanner body, and a signal (4) is obtained, and is denoted as P light_2. The signal (4) passes through the polarizer layer again, and a signal (5) is obtained. A polarization direction of the signal (5) is parallel to the polarization direction of the polarizer layer, and is denoted as P light_3. The signal (5) is incident on the waveplate layer, and an emergent signal is a signal (6). Because emergent light that is obtained after linearly polarized light is incident on the waveplate layer is circularly polarized light (if an error is considered, the emergent light may alternatively be elliptical polarization), the signal (6) is the circularly polarized light.

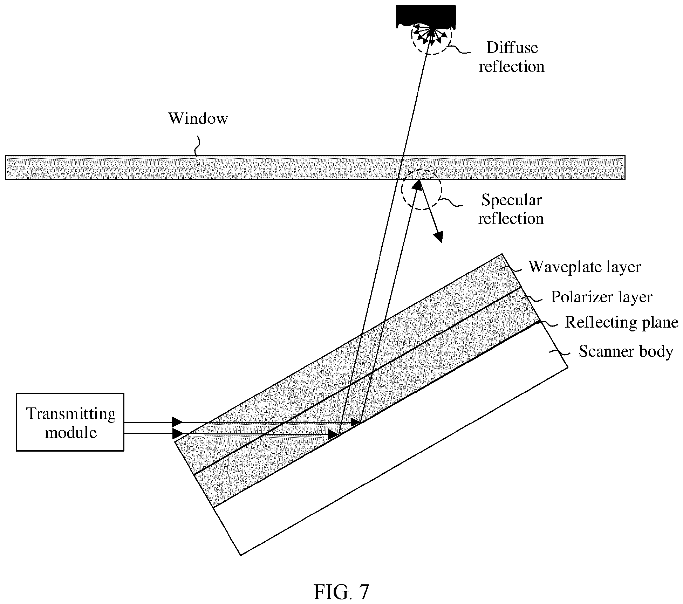

After a light signal from a transmitting module is transmitted from the scanning apparatus shown in FIG. 5 (for ease of description, the light signal that is from the transmitting module and that is transmitted from the scanning apparatus is referred to as the emergent signal below), the light signal may be propagated to a range of a field of view, but may pass through some optical elements in the detection apparatus, such as a window, in a propagation process. When passing through the optical element, most light signals are irradiated to the detection area through the optical element, but some light signals may be reflected by the optical element. FIG. 7 is a diagram of a transmitting light path according to an embodiment of this application. A part of the emergent signal may be irradiated to an object in the detection area. Because an object in a real world is usually rough, diffuse reflection is performed when the light signal is irradiated on the object. However, a part of the emergent signal may be reflected on the optical element (for example, the window). Because a surface of the optical element is usually smooth, reflection performed on the surface of the optical element is specular reflection.

When the polarized light is reflected, polarization states of reflected signals obtained through diffuse reflection and through specular reflection are different. Specifically, when specular reflection is performed on the polarized light, a reflected light signal is still the polarized light. When diffuse reflection is performed on the polarized light, a polarization direction of a reflected light signal may change. In some scenarios, when specular reflection is performed on the polarized light, the reflected light signal is the polarized light, and a polarization direction may not change (or slightly change). When diffuse reflection is performed on the polarized light, the returned light signal may be changed into natural light.

In embodiments of this application, the scanning apparatus may block an emergent signal that is reflected by the optical element. Specifically, a polarized light signal after specular reflection is performed is still the polarized light signal. Therefore, when the emergent signal is circularly polarized light, a specularly reflected light signal of the emergent signal is still the circularly polarized light. When the circularly polarized light is incident on the waveplate again, the waveplate layer can convert the circularly polarized light into linearly polarized light, and a polarization direction of the linearly polarized light is perpendicular to the polarization direction of the polarizer layer, that is, the S light. Because the S light is blocked when being incident on the polarizer layer, the specularly reflected light signal of an emergent light signal cannot reach the reflecting plane of the scanning apparatus. As a result, the signal also cannot be reflected to the detection area again. In this way, the scanning apparatus in embodiments of this application can prevent the signal reflected by the optical element from being reflected by the scanning apparatus again to the field of view, so that fewer ghost images are generated, strength of the interference signal is reduced. This helps improve identification precision of the lidar.

It should be noted that, when a light signal that can originally pass through the polarizer layer reaches the polarizer layer again after being reflected by the reflecting plane, a polarization direction of the light signal that originally passes through the polarizer layer may have changed. Therefore, some light signals may be blocked by the polarizer layer. The transmitting signal shown in FIG. 6 is used as an example. The foregoing process may be indicated as follows: The signal (5) and the signal (4) are not completely the same. Specifically, the signal (3) is transmitted from the polarizer layer at a first moment. In this case, the polarization direction of the signal (3) is parallel to a polarizer. When the signal (4) reaches the polarizer layer at a second moment, a polarization direction of the signal (4) may not be completely parallel to the polarization direction of the polarizer layer. Therefore, a light signal that is in the signal (4) and whose polarization direction is parallel to the polarizer layer passes through the polarizer layer, to form the signal (5), and a part of the light signal in the signal (4) is blocked by the polarizer layer.

It should be understood that, because the scanning apparatus moves, the polarizer layer may also move together. However, after the light signal that is originally parallel to the polarization direction of the polarizer layer moves at the polarizer layer, a part of the light signal may be blocked by the polarizer layer. FIG. 6 is used as an example. Because a location of a polarizer changes between the first moment and the second moment, the polarization direction of the signal (4) may be not completely parallel to the polarization direction of the polarizer layer. Therefore, the light signal that is in the signal (4) and whose polarization direction is parallel to the polarizer layer passes through the polarizer layer, to form the signal (5), and the part of the light signal in the signal (4) is blocked by the polarizer layer.

In this embodiment of this application, because the polarizer layer is attached to the scanner body, the polarizer layer and the scanner body move consistently, so that a relative location difference between the polarizer layer and the reflecting plane can be reduced, and a propagation time for the transmitting light signal to reach the polarizer layer for the second time is shortened. In this way, a loss of the light signal is reduced and signal effectiveness is improved.

It should be understood that, in embodiments of this application, for ease of describing a property of a light signal that passes through a specific layer, spacing between different layers is shown in some figures, but the figures should not be understood as a limitation on the scanning apparatus. In an implementation process, there may be or may not be spacing between different levels. Whether there is spacing and a distance of the spacing depend on a specific design.

It should be noted that a receiving light path includes both a light signal reflected by an object in the detection area (referred to as an echo signal of a real object below) and a reflected signal from the optical element.

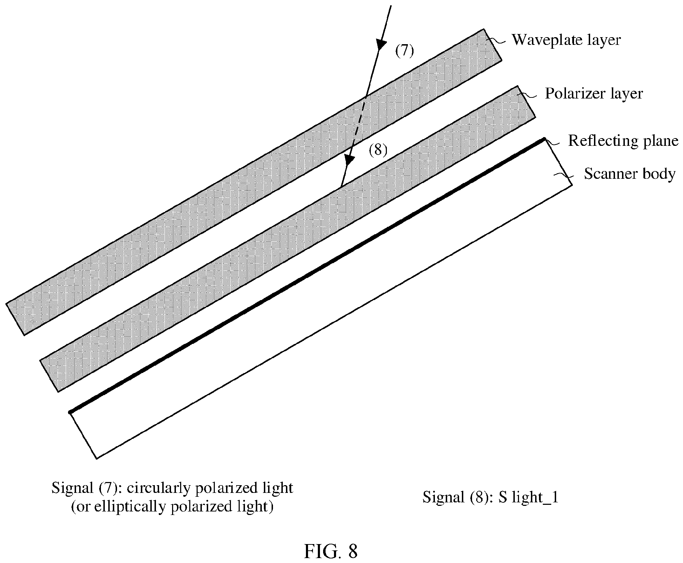

The following first describes a light path of the reflected signal from the optical element. FIG. 8 is a diagram of a receiving light path according to an embodiment of this application. A light signal, namely, a signal (7), that is incident on the waveplate layer is a specularly reflected light signal of the emergent light signal (namely, the signal (6)). Therefore, a polarization direction of the signal (7) is the circular polarization (if an error is considered, the emergent signal may alternatively be elliptical polarization), and is the same as the polarization direction of the signal (6). After the signal (7) is incident on the waveplate layer, the emergent light signal is a signal (8). The signal (8) is linearly polarized light, and a polarization direction of the signal (8) is perpendicular to the polarizer layer. Because the light signal whose polarization direction is perpendicular to a polarization direction of the polarizer is blocked, the signal (8) is blocked by the polarizer layer. Therefore, the specularly reflected light signal of the emergent light signal cannot be reflected to the detection area again, and does not cause interference to the echo signal of the real object.

The following describes a possible design of a light path of the echo signal of the real object. Optionally, the echo signal of the real object may be provided to a receiving module through the scanning apparatus.

In a design, the real echo signal also passes through the polarizer layer, the waveplate layer, and the reflecting plane, passes through the polarizer layer and the waveplate layer after being reflected by the reflecting plane, and is provided to the receiving module. Specifically, a diffusely reflected signal of the emergent light signal is natural light. After passing through the waveplate layer, the natural light is still the natural light, and after passing through the waveplate layer, the natural light is still the natural light. When the natural light passes through the polarizer layer, the emergent light signal is the S light. The S light is reflected by the reflecting plane of the scanner body, and is further incident on the waveplate layer through the polarizer layer again, and the waveplate layer converts the S light into the circularly polarized light. Further, the circularly polarized light may continue to propagate in a direction of the receiving module.

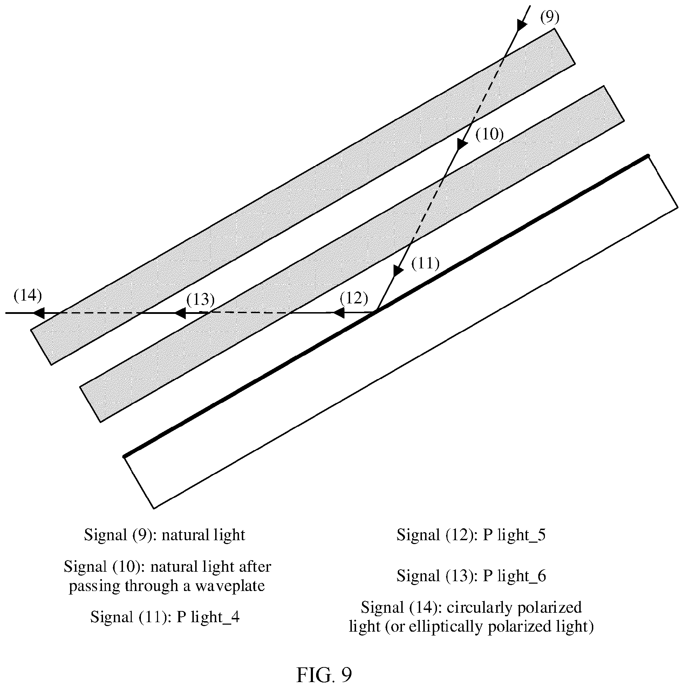

FIG. 9 is a diagram of another receiving light path according to an embodiment of this application. A signal (9) is a light signal obtained through reflection performed on the emergent light signal by an object in the detection area, that is, the echo signal of the real object. The signal (9) passes through the waveplate layer, and a signal (10) is obtained. After the signal 10 is incident on the polarizer layer, a light signal whose polarization direction is parallel to the polarizer layer is transmitted, and a signal (11) is obtained. A polarization direction of the signal (11) is parallel to the polarization direction of the polarizer layer. For ease of differentiation, the signal (11) is denoted as P light_4. The signal (11) is reflected on the reflecting plane, and a signal (12) is obtained, and is denoted as P light_5. When the signal (12) passes through the polarizer layer again, a light signal whose polarization direction is parallel to the polarizer layer is transmitted, and a signal (13) is obtained, and is denoted as P light_6. After the signal 13 passes through the waveplate layer, a signal (14) is obtained. The signal (13) is the linearly polarized light, and the linearly polarized light becomes the circularly polarized light after passing through the waveplate layer. Therefore, the signal (14) is the circularly polarized light. The signal (14) is provided to the receiving module.

It should be understood that the signal (11), the signal (12), and the signal (13) are P light at different moments, and polarization directions or energy of the signal (11), the signal (12), and the signal (13) may be different or may not be completely the same. For related descriptions, refer to the foregoing different related descriptions about the signal (4) and the signal (5). Details are not described herein again.

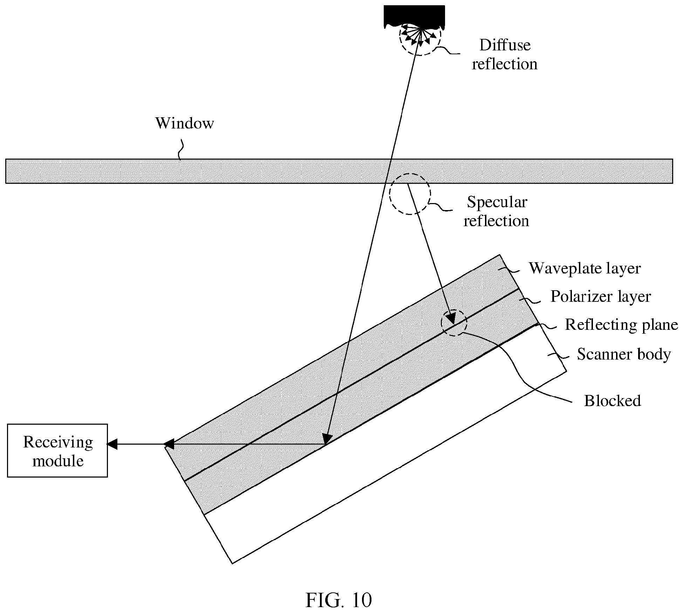

FIG. 10 is a diagram of a possible usage scenario of a scanning apparatus by using an example in which an optical element is a window. It can be learned that an emergent light signal reflected by the window is blocked when passing through the polarizer layer, and the echo signal returned by the object in the detection area is provided to the receiving module after passing through the waveplate layer, the polarizer layer, the reflecting plane, the polarizer layer, and the waveplate layer of the scanning apparatus in sequence.

In another design, the echo signal of the real object does not pass through the polarizer layer.

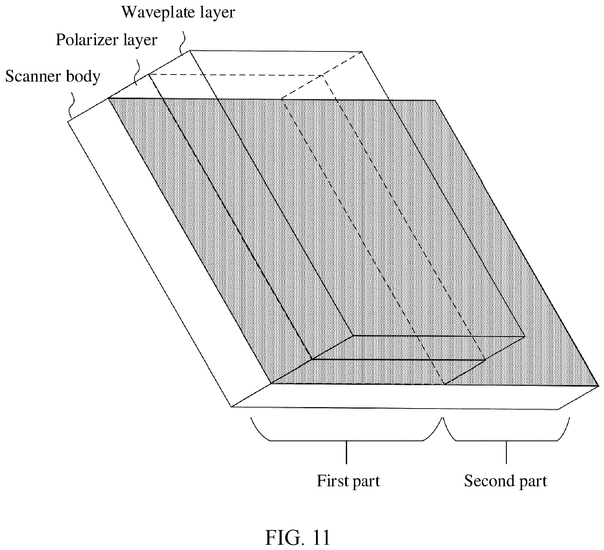

For example, the polarizer layer may be disposed on a part of the reflecting plane, and no polarizer layer is disposed on a part of the reflecting plane. For example, FIG. 11 is a diagram of another structure of a possible scanning apparatus according to an embodiment of this application. The scanner body has the reflecting plane. The scanner body includes a first part and a second part. The polarizer layer is disposed on the first part, and no polarizer layer is disposed on the second part.

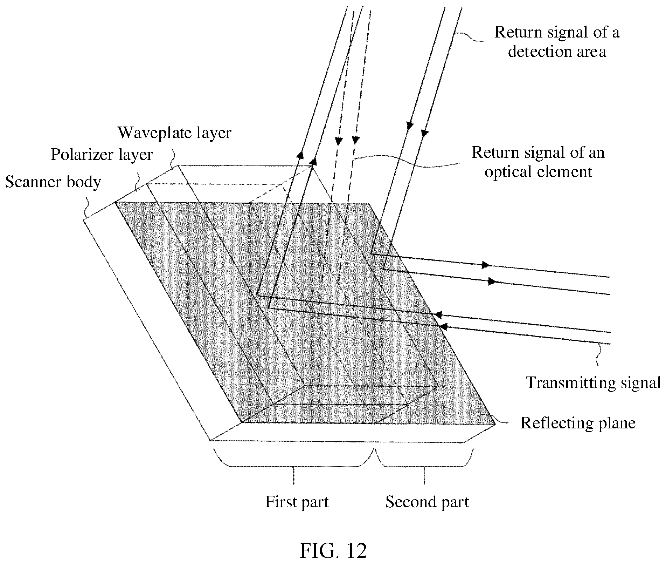

FIG. 12 is a diagram of another possible usage scenario of a scanning apparatus according to an embodiment of this application. When a signal is transmitted, the transmitting signal reaches the detection area by being reflected by the first part, and a return signal from the detection area is provided to the receiving module by being reflected by the second part. Further, a returned signal reflected by the optical element may be irradiated to the waveplate layer and the polarizer layer that are disposed on the first part, and is blocked by the polarizer layer. For details, refer to the embodiment shown in FIG. 8 and FIG. 10. Details are not described herein again.

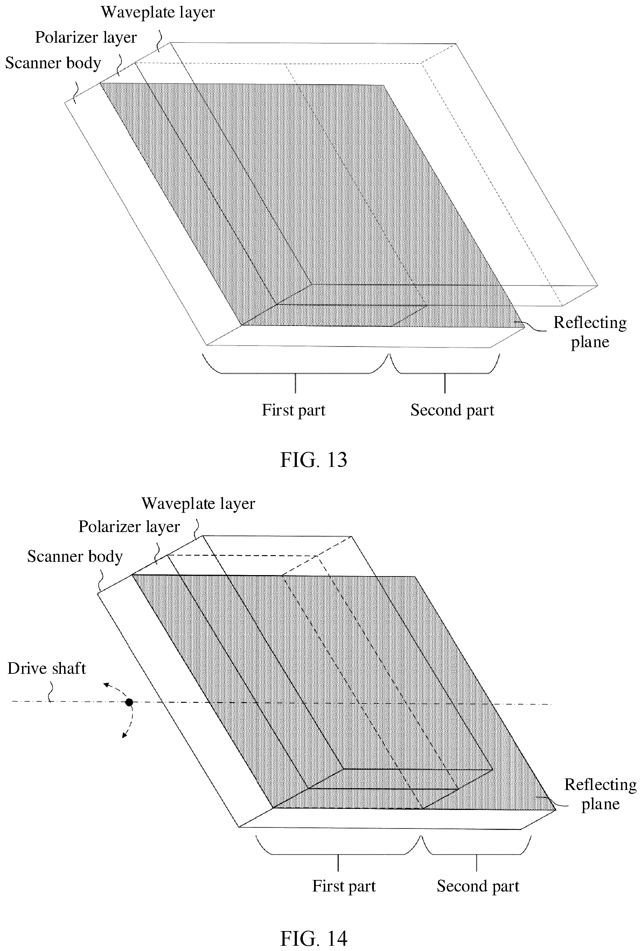

It should be understood that FIG. 11 and FIG. 12 are described by using an example in which no polarizer layer and waveplate layer are disposed on the second part. In an actual process, the waveplate layer may be disposed on a part on which no polarizer layer is disposed, no waveplate layer may be disposed, or a part of the waveplate layer may be disposed. For example, FIG. 13 is a diagram of another structure of a possible scanning apparatus according to an embodiment of this application. The scanner body includes the first part and the second part. The polarizer layer and the waveplate layer are disposed on the first part, and no polarizer layer is disposed on the second part, but the waveplate layer is disposed on the second part. When the signal is transmitted, the transmitting signal reaches the detection area by being reflected by the first part (through the reflecting plane, the polarizer layer, and the waveplate layer). When the return signal is received, the return signal from the detection area is provided to the receiving module by being reflected by the second part (through the reflecting plane and the waveplate layer). Further, the returned signal reflected by the optical element may be irradiated to the waveplate layer and the polarizer layer that are disposed on the first part, and is blocked by the polarizer layer. For details, refer to the embodiment shown in FIG. 8 and FIG. 10. Details are not described herein again.

The following provides a possible design of distribution of the first part and the second part.

When the foregoing scanning apparatus moves, motion, torque, or bending moment is transferred by using a drive shaft. Optionally, the drive shaft may be referred to as a rotating shaft, a pivot, or the like. For ease of description, they are collectively referred to as the drive shaft in embodiments of this application.

In a possible solution, the first part and the second part of the foregoing scanner body may be distributed along the drive shaft. For example, FIG. 14 is a diagram of another structure of a possible scanning apparatus according to an embodiment of this application. The first part and the second part of the scanner body are distributed along a direction of the drive shaft of the scanning apparatus. The polarizer layer is disposed on the first part of the scanner body, and no polarizer layer is disposed on the second part of the scanner body.

The foregoing examples are all described by using an example in which the scanning apparatus includes one reflecting plane. Embodiments of this application further provide a scanning apparatus including a plurality of reflecting planes, for example, a scanning apparatus including two reflecting planes, three reflecting planes, four reflecting planes, or more reflecting planes. The scanning apparatus includes the plurality of reflecting planes. When the scanning apparatus includes the plurality of reflecting planes, a structure on each reflecting plane is the same as or similar to a hierarchical structure of one reflecting plane described in embodiments of this application.

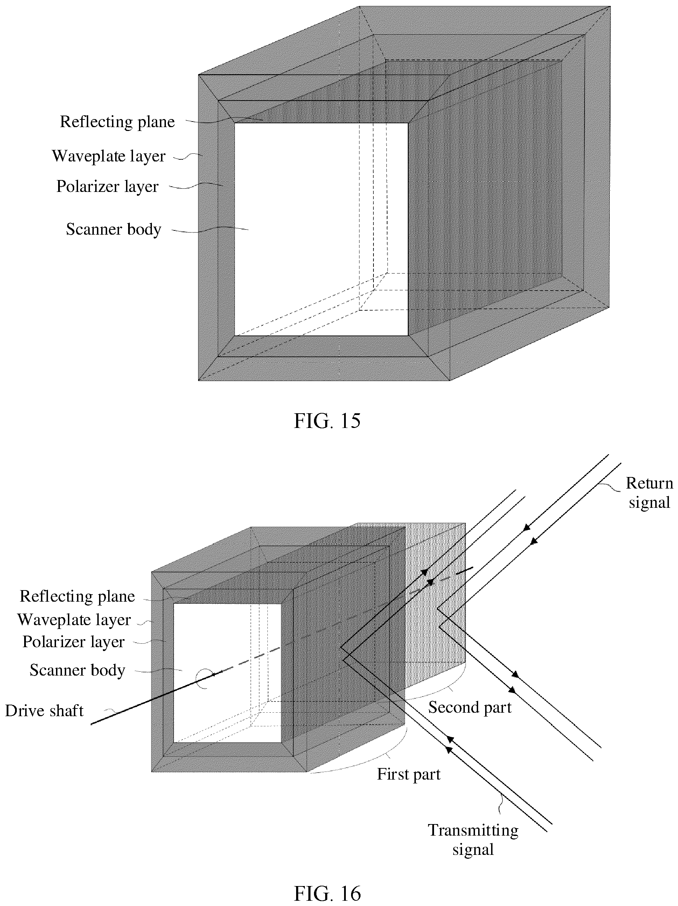

The following describes a scanning apparatus including a plurality of reflecting planes as an example. FIG. 15 is a diagram of another possible structure of a scanning apparatus according to an embodiment of this application. A scanner body of the scanning apparatus includes four reflecting planes, a polarizer layer is disposed on each reflecting plane, and a waveplate layer is disposed on the polarizer layer. The scanning apparatus may move, for example, rotate or swing, as a whole, to form different light signal emergent angles (that is, pointing angles of light spots in space) and receive return signals of the angles, thereby implementing scanning of the detection area.

In a possible solution, when the scanning apparatus includes the plurality of reflecting planes, no polarizer layer may be disposed on some reflecting planes. FIG. 16 is a diagram of another possible structure of a scanning apparatus according to an embodiment of this application. The scanner body of the scanning apparatus may include a first part and a second part. The polarizer layer and the waveplate layer are disposed on the reflecting plane of the first part of the scanner body, and no polarizer layer is disposed on the reflecting plane of the second part of the scanner body.

FIG. 16 further shows a scenario in which the scanning apparatus transmits and receives a light signal. When a signal is transmitted, the transmitting signal reaches the detection area by being reflected by the first part (through the reflecting plane, the polarizer layer, and the waveplate layer). When the return signal is received, the return signal from the detection area is provided to a receiving module by being reflected by the reflecting plane of the second part. Optionally, the waveplate layer may be disposed on the second part. For details, refer to FIG. 13. Details are not described herein again. Further, the returned signal reflected by an optical element may be irradiated to the waveplate layer and the polarizer layer that are disposed on the first part, and is blocked by the polarizer layer. For details, refer to an embodiment shown in FIG. 8, FIG. 10, and FIG. 12. Details are not described herein again.

In the foregoing embodiments, the scanning apparatus includes a plurality of layers. The plurality of layers are connected by gluing, clinching, fixing with a connector, or the like. The following lists several possible cases of connection between the layers as examples.

Case 1: Different layers of the scanning apparatus may be attached through gluing. The gluing means a technology in which surfaces of homogeneous or heterogeneous objects are joined together by using an adhesive.

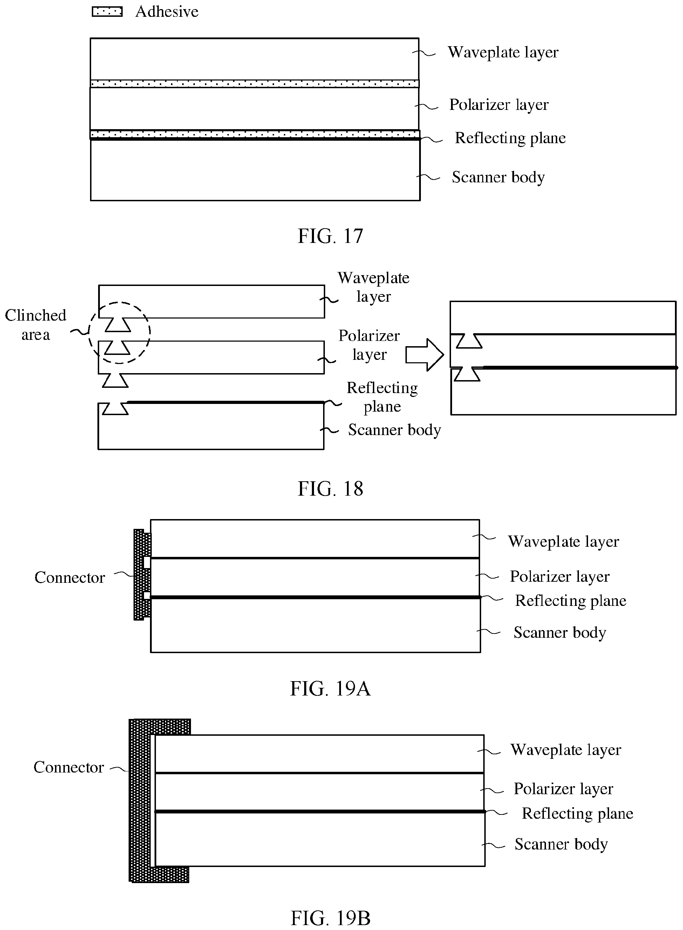

FIG. 17 is a diagram of a possible layer connection manner of a scanning apparatus according to this application. The polarizer layer is attached to the reflecting plane of the scanner body through gluing, and/or the waveplate layer is attached to the polarizer layer through gluing.

Selection of the adhesive is not limited in this application. For example, the adhesive may include an optical transparent adhesive (optically clear adhesive, OCA).

Case 2: Pressure is applied to enable surfaces of two layers to be absorbed together. In some scenarios, this manner is also referred to as optical contact bonding. Gluing is performed by using the optical contact bonding, so that a plane between the polarizer layer and the reflecting plane can be more flat, light transmittance can be improved, and energy consumption can be reduced.

Optionally, in this case, the two layers are attached by using an intermolecular force.

Case 3: Some uneven areas are disposed between two layers, and keep the uneven areas in contact with each other. FIG. 18 is a diagram of another possible layer connection manner of a scanning apparatus according to an embodiment of this application. There is an uneven area on a surface that is of the waveplate layer and that is close to the polarizer layer has an uneven area, and correspondingly, there is also an uneven area on a surface that is of the polarizer layer and that is close to the waveplate layer. The two uneven areas may form a clinched area, so that the two areas are in contact with each other, and the waveplate layer is attached to the polarizer layer. Similarly, the polarizer layer may also be attached to a next layer of the polarizer layer through clinching.

In this way, an adhesive in a transmitting light path and a receiving light path can be prevented from affecting a propagation direction and transmittance of a light signal, energy consumption can be reduced, and stability of the scanning apparatus is improved. This helps improve detection performance of the detection apparatus. Optionally, the clinched area may be disposed outside the transmitting light path and the receiving light path, to prevent energy loss of the light signal caused by an uneven interface of the clinched area. This helps improve identification precision of a radar.

Case 4: The connector is used to fasten the plurality of layers. Specifically, there may be a plurality of possible designs for the connector. For example, the plurality of layers may be fastened by using a connector located at edges, or the plurality of layers are secured by using a connector that surrounds the plurality of layers. FIG. 19A and FIG. 19B are diagrams of some other possible layer connection manners of a scanning apparatus according to an embodiment of this application. As shown in FIG. 19A, the connector is disposed on a left side of the scanning apparatus, so that one or more of the waveplate layer, the polarizer layer, the scanner body, or the like can be connected by using the connector. As shown in FIG. 19B, the plurality of layers may be secured by using the connector that surrounds the plurality of layers, so that the waveplate layer and the polarizer layer are attached to each other and/or the polarizer layer and the reflecting plane are attached to each other.

In this way, an adhesive in a transmitting light path and a receiving light path can be prevented from affecting a propagation direction and transmittance of a light signal, energy consumption can be reduced, and stability of the scanning apparatus is improved. This helps improve detection performance of the detection apparatus. Optionally, the clinched area may be disposed in an area outside the transmitting light path and the receiving light path, to further reduce the energy loss of the light signal.

It should be understood that, there may be another manner to attach different layers of the scanning apparatus in a specific implementation process, which is not listed one by one in this application. The foregoing plurality of cases may be combined during actual application, and the combination is not described herein again.

It should be noted that different layers may be connected in different connection manners in the scanning apparatus. For example, the polarizer layer may be connected to the scanner body by using the connector, and the waveplate layer are connected to the polarizer layer through gluing. For a combined connection manner, examples are not listed one by one herein again.

In a specific embodiment, the foregoing polarizer layer includes a polarizer, and there may be one or more polarizers. Optionally, when the polarizer layer includes the plurality of polarizers, functions or materials of the plurality of polarizers may be the same or may be different.

In a specific embodiment, the foregoing waveplate layer includes a waveplate, and there may be one or more waveplates. For example, the waveplate layer may include a quarter-wave plate.

Optionally, when the waveplate layer includes the plurality of waveplates, functions or materials of the plurality of waveplates may be the same or may be different. In a possible implementation, the waveplate layer may include the quarter-wave plate and a half-wave plate. In the foregoing implementation, a combination of " the half-wave plate + the quarter-wave plate" has effect of de-dispersion. Even when a wavelength of the light signal is changed in a high-temperature (or low-temperature) case, a ghost image can be eliminated. This helps improve identification precision of the lidar.

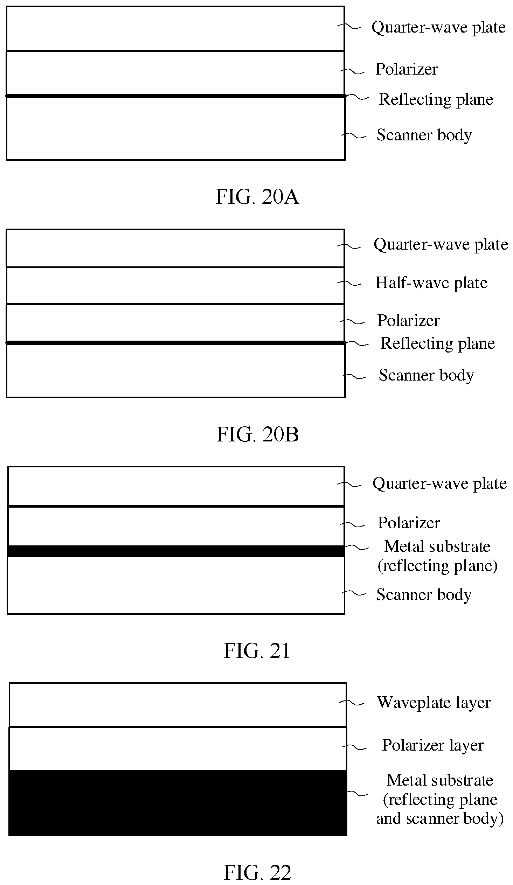

FIG. 20A and FIG. 20B each are diagrams of another possible structure of a scanning apparatus according to an embodiment of this application. As shown in FIG. 20A, the waveplate layer may include one quarter-wave plate, and the polarizer layer may include one polarizer. As shown in FIG. 20B, the waveplate layer may include one quarter-wave plate and one half-wave plate, and the polarizer layer may include one polarizer. The half-wave plate may be attached to the polarizer layer, and the quarter-wave plate may be attached to the half-wave plate. Certainly, there may be another design for a disposition sequence of a plurality of waveplates in the waveplate layer. For example, the quarter-wave plate may be attached to the polarizer layer, and the half-wave plate may be attached to the quarter-wave plate. A plurality of disposition sequences are not listed one by one in this application.

In a specific embodiment, a difference between a first angle and a second angle is less than or equal to a first threshold, the first angle is an included angle between a polarization direction of the polarizer layer and an optical axis direction of the waveplate layer, and the second angle is 45°. For example, the first threshold may be 0.2°. To be specific, an included angle between the polarization direction of the polarizer layer and an optical axis direction of the quarter-wave plate (or between equivalent optical axis directions of the quarter-wave plate and the half-wave plate) is 45° ± 0.2°. In this way, linearly polarized light that is incident on the waveplate through the polarizer can be converted, to a greatest extent, into circularly polarized light. Therefore, blocking effect of the polarizer layer on a light signal returned by a window is improved, fewer ghost images are generated, and strength of an interference signal is reduced. This helps improve identification precision of the lidar.

In a specific embodiment, there is an anti-reflective coating on a first surface of the waveplate layer. In this way, a probability that the light signal passes through the waveplate layer can be improved, a loss of the light signal can be reduced, and signal effectiveness can be improved. This helps improve the identification precision of the detection apparatus.

Optionally, the first surface may be a surface away from a scanner body.

In a specific embodiment, a reflecting plane includes a substrate, and a material of the substrate is a reflective material. For example, the substrate may be metal (which is referred to as a metal substrate). The following uses the metal substrate as an example for description. FIG. 21 is a diagram of another possible structure of a scanning apparatus according to an embodiment of this application. The reflecting plane of the scanning apparatus is provided by the metal substrate.

It should be understood that, in the embodiment shown in FIG. 21, the substrate may be disposed on the scanner body. In some scenarios, the substrate may alternatively be used as the scanner body. For example, FIG. 22 is a diagram of another possible structure of a scanning apparatus according to an embodiment of this application. Both the reflecting plane and the scanner body of the scanning apparatus are provided by using the metal substrate.

In a specific embodiment, the reflecting plane includes the substrate and a reflective coating, and the reflective coating is attached to a surface of the substrate. The reflective coating may reflect the light signal. The reflecting plane of the scanning apparatus is provided by the reflective coating, and the substrate is configured to carry the reflective coating. Optionally, the material of the substrate may include a material such as glass, crystal, inorganic mineral, or metal.

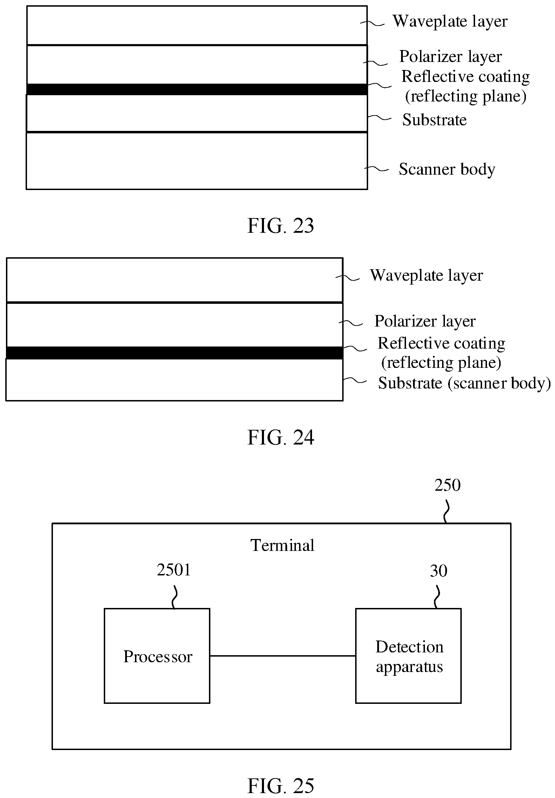

FIG. 23 is a diagram of another possible structure of a scanning apparatus according to an embodiment of this application. The reflective coating carried on the substrate forms the reflecting plane. It should be understood that, in the embodiment shown in FIG. 23, the substrate may be disposed on the scanner body. In some scenarios, the substrate may alternatively be used as the scanner body. For example, FIG. 24 is a diagram of another possible structure of a scanning apparatus according to an embodiment of this application. The reflecting plane is provided by the reflective coating. The substrate may further be used as the scanner body in addition to carrying the reflective coating.

An embodiment of this application further provides a lidar. The lidar includes a scanner, a laser transmitter, and a receiver. The laser transmitter is configured to generate a transmitting signal. The receiver is configured to detect a light signal. The scanner includes the scanning apparatus described in the foregoing embodiments, for example, the scanning apparatus in an embodiment shown in FIG. 4, FIG. 11, FIG. 13, FIG. 14, FIG. 15, FIG. 16, FIG. 17, FIG. 18, FIG. 19A, FIG. 19B, FIG. 20A, FIG. 20B, FIG. 21, FIG. 22, or FIG. 23, or a possible design thereof.

In a possible implementation, the lidar further includes a window. A light signal reflected by the window is blocked by a polarizer layer in the scanning apparatus, and a light signal reflected by an object in a field of view of the lidar is provided to the receiver by the scanning apparatus.

Alternatively, the foregoing window may be replaced with another optical element in the lidar.

Alternatively, the foregoing lidar may be replaced with another light detection apparatus, for example, a combined detection apparatus.

An embodiment of this application further provides a terminal. The terminal includes the foregoing detection apparatus, for example, the detection apparatus 30, or the foregoing lidar. The terminal (or specifically the detection apparatus in the terminal) includes the scanning apparatus described in the foregoing embodiments, for example, the scanning apparatus in an embodiment shown in FIG. 4, FIG. 11, FIG. 13, FIG. 14, FIG. 15, FIG. 16, FIG. 17, FIG. 18, FIG. 19A, FIG. 19B, FIG. 20A, FIG. 20B, FIG. 21, FIG. 22, FIG. 23, or FIG. 24, or a possible design thereof.

FIG. 25 is a possible diagram of a possible structure of a terminal 250 according to an embodiment of this application. The terminal 250 includes a processor 2501 and the foregoing detection apparatus 30. The processor 2501 and the detection apparatus 30 may be connected or communicate with each other. A specific implementation of the connection or the communication is not limited in this embodiment of this application.

The processor is configured to obtain detection data about an object in a field of view based on a return signal received by a receiving module of the detection apparatus 30. The detection data may be specifically point cloud data corresponding to the field of view, or the detection data may include one or more of a distance, an orientation, a pixel area occupied by a target, a height, a speed, a posture, shape information, or the like of the target in the field of view.

Optionally, the processor 2501 is a module for performing an arithmetic operation and/or a logical operation, and may specifically include one or more of the following apparatuses: a central processing unit (central processing unit, CPU), an application processor (application processor, AP), a time-to-digital converter (Time-to-Digital Converter, TDC), a filter, a graphics processing unit (graphics processing unit, GPU), a microprocessor unit (microprocessor unit, MPU), an application-specific integrated circuit (Application-Specific Integrated Circuit, ASIC), an image signal processor (image signal processor, ISP), a digital signal processor (digital signal processor, DSP), a field programmable gate array (Field Programmable Gate Array, FPGA), a complex programmable logic device (Complex programmable logic device, CPLD), a coprocessor (assisting a central processing unit in corresponding processing and application), a microcontroller unit (Microcontroller Unit, MCU), a neural network processor (neural network processing unit, NPU), and/or the like.

Optionally, the foregoing terminal may include a mobile platform or a transportation tool such as a vehicle, a ship, an airplane, a train, a spacecraft, an uncrewed aerial vehicle, or a robot.

Embodiments of this application may be further applied to the field of intelligent vehicle technologies, such as vehicle-to-everything (vehicle-to-everything, V2X), a long term evolution-vehicle (Long Term Evolution-vehicle, LTE-V) technology, and vehicle to vehicle (vehicle to vehicle, V2V).

In the descriptions of this application, the terms "center", "on", "below", "vertical", "horizontal", "inside", "outside", and the like are orientation or location relationships based on the accompanying drawings, and are merely intended for ease of describing this application and simplifying description, but does not indicate or imply that a described apparatus or element needs to have a specific orientation or needs to be construed and operated in a specific orientation. Therefore, such terms should not be understood as a limitation on this application.

In the descriptions of this application, it should be noted that, unless otherwise clearly specified and limited, the term "connected" should be understood in a broad sense, for example, may be fastenedly connected, or may be detachably connected, or may further be abuttingly connected or integrally connected. A person of ordinary skill in the art may understand specific meanings of the foregoing terms in this application based on specific cases.

In embodiments of this application, terms such as "example" or "for example" represent giving an example, an illustration, or a description. Any embodiment or design scheme described as an "example" or "for example" in this application should not be explained as being more preferred or having more advantages than another embodiment or design scheme. To be precise, use of the term "example", "for example", or the like is intended to present a related concept in a specific manner.

In embodiments of this application, "at least one" means one or more, and "a plurality of" means two or more. "At least one of the following items (pieces)" or a similar expression thereof means any combination of these items, including a singular item (piece) or any combination of plural items (pieces). For example, at least one of a, b, or c may indicate: a, b, c, (a and b), (a and c), (b and c), or (a, b, and c), where a, b, and c each may be singular or plural. The term "and/or" describes an association relationship between associated objects, and indicates that three relationships may exist. For example, A and/or B may indicate the following three cases: Only A exists, both A and B exist, and only B exists, where A and B each may be singular or plural. The character "/" generally indicates an "or" relationship between the associated objects.

In addition, unless otherwise specified, ordinal numbers such as "first" and "second" in embodiments of this application are used to distinguish between a plurality of objects, but are not intended to limit a sequence, a time sequence, priorities, or importance of the plurality of objects. For example, a first light signal and a second light signal are merely for ease of description, but do not indicate differences in sources, sequences, importance, and the like of the first light signal and the second light signal. In some embodiments, the first light signal and the second light signal may alternatively be a same light signal.

According to the context, the term "when" used in the foregoing embodiments may be interpreted as a meaning of "if", "after", "in response to determining", or "in response to detecting". The foregoing descriptions are merely optional embodiments of this application, but are not intended to limit this application. Any modification, equivalent replacement, improvement, or the like made without departing from the concept and principle of this application shall fall within the protection scope of this application.

A person of ordinary skill in the art may understand that all or some of the steps of the foregoing embodiments may be implemented by hardware or a program instructing related hardware. The program may be stored in a computer-readable storage medium. The storage medium may be a read-only memory, a magnetic disk, an optical disc, or the like.

## Claims

1. A scanning apparatus, wherein
the scanning apparatus comprises a scanner body, a polarizer layer, and a waveplate layer, the scanner body has at least one reflecting plane, the polarizer layer is attached to the reflecting plane of the scanner body, and the waveplate layer is attached to the polarizer layer.

2. The scanning apparatus according to claim 1, wherein the polarizer layer is attached to the reflecting plane of the scanner body through gluing.

3. The scanning apparatus according to claim 1 or 2, wherein the waveplate layer is attached to the polarizer layer through gluing.

4. The scanning apparatus according to any one of claims 1 to 3, wherein
an incident light signal is incident on the waveplate layer and the polarizer layer in sequence, and emerges from the polarizer layer and the waveplate layer in sequence after being reflected by the reflecting plane, to obtain an emergent signal.

5. The scanning apparatus according to claim 4, wherein
the polarizer layer is configured to block a specularly reflected light signal corresponding to the emergent signal, and the specularly reflected light signal is a light signal obtained through specular reflection performed on the emergent signal.

6. The scanning apparatus according to claim 4, wherein the polarizer layer is configured to: block a first reflected light signal, and transmit a second reflected light signal, wherein the first reflected light signal is obtained through reflection performed on the emergent signal by a window, and the second reflected light signal is obtained through reflection performed on the emergent signal by an object in a field of view of the scanning apparatus.

7. The scanning apparatus according to any one of claims 1 to 6, wherein
a first light signal from a laser transmitter passes through the waveplate layer and the polarizer layer in sequence, to obtain a second light signal, wherein a polarization direction of the second light signal is parallel to a polarization direction of the polarizer layer;
the second light signal passes through the polarizer layer after being reflected by the at least one reflecting plane, to obtain a third light signal, wherein a polarization direction of the third light signal is parallel to the polarization direction of the polarizer layer;
the third light signal passes through the waveplate layer, to obtain a fourth light signal, wherein a polarization direction of the fourth light signal is circular polarization;
a return signal corresponding to the fourth light signal comprises a fifth light signal and a sixth light signal, wherein the fifth light signal is a light signal obtained through specular reflection performed on the fourth light signal, the sixth light signal is a light signal obtained through diffuse reflection performed on the fourth light signal, and a polarization direction of the fifth light signal is circular polarization;
the fifth light signal is incident on the waveplate layer and is converted into a seventh light signal by the waveplate layer, the seventh light signal is incident on the polarizer layer, the seventh light signal is blocked by the polarizer layer, and a polarization direction of the seventh light signal is perpendicular to the polarization direction of the polarizer layer;
the sixth light signal is incident on the waveplate layer, passes through the waveplate layer, and is incident on the polarizer layer, a light signal that is in the sixth light signal and whose polarization direction is perpendicular to the polarization direction of the polarizer layer is blocked by the polarizer layer, and a light signal that is in the sixth light signal and whose polarization direction is parallel to the polarization direction of the polarizer layer passes through the polarizer layer, to obtain an eighth light signal; and
the eighth light signal is reflected by the at least one reflecting plane, and is provided to a receiver after passing through the polarizer layer and the waveplate layer in sequence.

8. The scanning apparatus according to claim 7, wherein the fifth light signal is obtained through reflection performed on the emergent signal by the window, and the sixth light signal is obtained through reflection performed on the emergent signal by the object in the field of view of the scanning apparatus.

9. The scanning apparatus according to any one of claims 1 to 6, wherein the scanner body comprises a first part and a second part, the first part and the second part are arranged along a drive shaft, the polarizer layer is attached to a reflecting plane of the first part of the scanner body, and no polarizer layer is disposed on a reflecting plane of the second part of the scanner body.

10. The scanning apparatus according to claim 9, wherein
a first light signal from a laser transmitter passes through the waveplate layer and the polarizer layer in sequence, to obtain a second light signal, wherein the second light signal is parallel to a polarization direction of the polarizer layer;
the second light signal passes through the polarizer layer after being reflected by the reflecting plane of the first part, to obtain a third light signal, wherein a polarization direction of the third light signal is parallel to the polarization direction of the polarizer layer;
the third light signal passes through the waveplate layer, to obtain a fourth light signal, wherein a polarization direction of the fourth light signal is circular polarization;
a return signal corresponding to the fourth light signal comprises a ninth light signal and a tenth light signal, wherein the ninth light signal is a light signal obtained through specular reflection performed on the fourth light signal, the tenth light signal is a light signal obtained through diffuse reflection performed on the fourth light signal, and a polarization direction of the ninth light signal is circular polarization;
the ninth light signal is incident on the waveplate layer and is converted into an eleventh light signal by the waveplate layer, the eleventh light signal is incident on the polarizer layer, the eleventh light signal is blocked by the polarizer layer, and a polarization direction of the eleventh light signal is perpendicular to the polarization direction of the polarizer layer; and
the tenth light signal is incident on the reflecting plane of the second part of the scanner body, and is reflected by the reflecting plane of the second part of the scanner body, to obtain a twelfth light signal, wherein the twelfth light signal is provided to a receiver.

11. The scanning apparatus according to claim 10, wherein the ninth light signal is obtained through reflection performed on the emergent signal by the window, and the tenth light signal is obtained through reflection performed on the emergent signal by the object in the field of view of the scanning apparatus.

12. The scanning apparatus according to any one of claims 1 to 11, wherein the waveplate layer comprises a quarter-wave plate.

13. The scanning apparatus according to any one of claims 1 to 11, wherein the waveplate layer comprises the quarter-wave plate and a half-wave plate.

14. The scanning apparatus according to any one of claims 1 to 13, wherein the reflecting plane comprises a substrate, and a material of the substrate is metal.

15. The scanning apparatus according to any one of claims 1 to 13, wherein the reflecting plane comprises the substrate and a reflective coating, and the reflective coating is attached to a surface of a substrate.

16. The scanning apparatus according to claim 15, wherein the material of the substrate is glass or crystal.

17. The scanning apparatus according to any one of claims 1 to 16, wherein a difference between a first angle and a second angle is less than or equal to a first threshold, the first angle is an included angle between the polarization direction of the polarizer layer and an optical axis direction of the waveplate layer, and the second angle is 45°.

18. The scanning apparatus according to any one of claims 1 to 17, wherein there is an anti-reflective coating on a first surface of the waveplate layer, and the first surface is a surface away from the scanner body.

19. A lidar, wherein the lidar comprises a scanner, a laser transmitter, and a receiver, the laser transmitter is configured to generate a transmitting signal, the receiver is configured to detect a light signal, and the scanner comprises the scanning apparatus according to any one of claims 1 to 18.

20. The lidar according to claim 19, wherein the lidar further comprises a window, a light signal obtained through reflection performed by the window is blocked by a polarizer layer in the scanning apparatus, and a light signal obtained through reflection performed by an object in a field of view of the lidar is provided to the receiver by the scanning apparatus.

21. A terminal, wherein the terminal comprises the scanning apparatus according to any one of claims 1 to 18, or the terminal comprises the lidar according to claim 19 or 20.

22. The terminal according to claim 21, wherein the terminal is a vehicle, an uncrewed aerial vehicle, or a robot.
